# EUROPÄISCHE PATENTANMELDUNG

(11) **EP 3 428 396 A1**
(43) Veröffentlichungstag der Anmeldung: **16.01.2019**
(21) Anmeldenummer: 18179297.9
(22) Anmeldetag: 22.06.2018
(51) Int. Cl.: F01D 5/16

(54) **VERFAHREN ZUR ERZEUGUNG UND AUSWAHL EINES VERSTIMMUNGSMUSTERS EINES EINE MEHRZAHL VON LAUFSCHAUFELN AUFWEISENDEN LAUFRADS EINER STRÖMUNGSMASCHINE**

(30) Priorität: 23.06.2017 DE 102017113998
(71) Anmelder: Rolls-Royce Deutschland Ltd & Co KG, 15827 Blankenfelde-Mahlow (DE)
(72) Erfinder: Figaschewsky, Felix, 10247 Berlin (DE); Nipkau, Jens, 10245 Berlin (DE); KLAUKE, Thomas, 03222 Lübbenau/Spreewald OT Groß Beuchow (DE); Kühhorn, Arnold, 10715 Berlin (DE); Beirow, Bernd, 03048 Cottbus (DE)
(74) Vertreter: Müller, Wolfram Hubertus

(57) **Zusammenfassung**

Die Erfindung betrifft ein Verfahren zur Erzeugung und Auswahl eines Verstimmungsmusters eines eine Mehrzahl von Laufschaufeln aufweisenden Laufrads einer Strömungsmaschine. Das Verfahren umfasst die Schritte: Bereitstellen (105) von ersten Informationen zu den Randbedingungen einer Laufradanregung durch fremderregte Schwingungen; Bereitstellen (104) eines Modells reduzierter Ordnung des Laufrads; Erzeugen (106-108) einer Mehrzahl von Verstimmungsmustern des Laufrads, wobei das Erzeugen der Verstimmungsmuster umfasst: Eingeben der ersten Informationen und des Modells reduzierter Ordnung in einen mehrkriteriellen Optimierer und Erzeugen (106, 107) der Verstimmungsmuster durch den mehrkriteriellen Optimierer unter Optimierung einer Stabilität des Systems gegenüber selbsterregten Schwingungen und unter gleichzeitiger Optimierung einer Stabilität des Systems gegenüber fremderregten Schwingungen. Weiter wird für jedes erzeugte Verstimmungsmuster das Modells reduzierter Ordnung an einem Laufrad ausgeführt (108), das das erzeugte Verstimmungsmuster implementiert, und werden die Eigenschaften dieses Laufrads im Hinblick auf selbsterregte Schwingungen und im Hinblick auf fremderregte Schwingungen bestimmt (109). Abschließend wird eines der Verstimmungsmuster für eine Implementierung ausgewählt (110).

## Beschreibung

Die Erfindung betrifft ein Verfahren zur Erzeugung und Auswahl eines Verstimmungsmusters eines eine Mehrzahl von Laufschaufeln aufweisenden Laufrads einer Strömungsmaschine.

Laufräder von Strömungsmaschinen werden zwangsläufig mit fertigungsbedingten Störungen der Rotationsymmetrie gefertigt. Diese Störungen bewirken, dass die einzelnen Schaufeln eines Laufrads nicht vollständig identisch zueinander sind, sondern geringe Geometrie- und/oder Materialunterschiede zueinander aufweisen. Dies führt zu einer Abweichung der Schaufeleigenfrequenzen der einzelnen Schaufeln und damit insgesamt zu einer auch als "Mistuning" bezeichneten Verstimmung der Gesamtstruktur.

Eine solche Verstimmung beeinflusst das Schwingungsverhalten des Laufrads. Im Kontext der vorliegenden Erfindung wird zum einen das auch als "Flutter" bezeichnete Schaufelflattern betrachtet. Hierbei handelt es sich um selbsterregte Schwingungen der Schaufeln. Zum anderen können die Laufradschaufeln durch als "Forced Response" bezeichnete fremderregte Schwingungen in Schwingungen versetzt werden. Der Grund für solche fremderregte Schwingungen liegt in Asymmetrien der anströmenden Luft, die beispielsweise durch Nachlaufdellen vorangehender Verdichterstufen oder, im Falle eines Fans, durch eine asymmetrische Anströmung im Triebwerkseinlauf verursacht werden.

Es hat sich herausgestellt, dass die Anfälligkeit der Schaufeln eines Laufrads, durch selbsterregte Schwingungen angeregt zu werden, dadurch reduziert werden kann, dass das Laufrad aktiv verstimmt wird, d.h. den Laufschaufeln zusätzlich zu den fertigungsbedingten oder durch Materialinhomogenitäten bewirkten und damit zufälligen Abweichungen der Schaufeleigenfrequenzen gezielte Abweichungen der Schaufeleigenfrequenzen zugefügt werden. Durch die gezielte Verstimmung des Systems wird verhindert oder reduziert, dass bei der Eigenfrequenz einer Schaufel Energie zu anderen Schaufeln transportiert wird. Zur Realisierung einer solchen gezielten Verstimmung sind eine Vielzahl von Maßnahmen bekannt, die die Schaufeln eines Laufrads geometrisch oder hinsichtlich ihrer Anordnung variieren. Beispielsweise beschreibt die US 6 428 278 B1 die Verstimmung eines Laufrads durch Materialaussparungen an der Schaufelspitze oder an der Vorderkante der einzelnen Laufschaufeln.

Allerdings verhält es sich so, dass durch eine Verstimmung des Systems erreichte verbesserte Eigenschaften eines Laufrads im Hinblick auf selbsterregte Schwingungen nicht notwendigerweise die Eigenschaften des Laufrads im Hinblick auf fremderregte Schwingungen verbessern. In der Regel ist es sogar so, dass bei einer Verstimmung des Laufrads die Anfälligkeit für fremderregte Schwingungen zunimmt.

Aus der EP 2 762 678 A1 ist ein Verfahren zum Verstimmen eines Laufschaufelgitters bekannt, bei dem diskrete Massewerte und radiale Schwerpunktslagen der Laufschaufeln zusammen mit der jeweiligen Eigenfrequenz in eine Wertetabelle aufgenommen werden und eine Ist-Eigenfrequenz durch Interpolation bestimmt wird.

Der vorliegenden Erfindung liegt die Aufgabe zugrunde, ein Verfahren anzugeben, das es ermöglicht, Verstimmungsmuster eines Laufrads zu definieren, die eine Verbesserung der Systemeigenschaften bei selbsterregten Schwingungen bewirken, ohne dabei die Systemeigenschaften bei fremderregten Schwingungen substantiell zu verschlechtern oder diese dabei sogar ebenfalls zu verbessern.

Diese Aufgabe wird durch ein Verfahren mit den Merkmalen des Patentanspruchs 1 gelöst. Ausgestaltungen der Erfindung sind in den Unteransprüchen angegeben.

Danach stellt die Erfindung ein Verfahren zur Erzeugung und Auswahl eines Verstimmungsmusters für ein eine Mehrzahl von Laufschaufeln aufweisenden Laufrads einer Strömungsmaschine zur Verfügung. Unter einem Verstimmungsmuster wird dabei ein Muster verstanden, das im Hinblick auf mindestens eine Schwingungsmode für jede Laufschaufel des Laufrads eine Verstimmung bzw. Frequenzabweichung der Eigenfrequenz von einer Nennfrequenz angibt. Die Nennfrequenz ist dabei die Eigenfrequenz, die die Laufschaufeln bei Fehlen jeglicher Verstimmung in der betrachten Schwingungsmode aufweisen würden.

Es geht der Erfindung somit um die Bereitstellung eines Verstimmungsmusters, das im Hinblick auf mindestens eine Schwingungsmode Eigenfrequenzen der Laufschaufeln angibt, wobei die Eigenfrequenzen der einzelnen Laufschaufeln sich unterscheiden und dadurch insgesamt die Verstimmung des Laufrads bereitstellen.

Nicht Gegenstand der Erfindung ist dagegen die praktische Realisierung der jeweiligen Laufschaufeln dahingehend, dass sie die Eigenfrequenzen des ausgewählten Verstimmungsmusters realisieren. Dies kann in an sich bekannter Weise beispielsweise durch geometrische Änderungen an den einzelnen Laufschaufeln erfolgen.

Die Erfindung nimmt eine mehrkriterielle Optimierung vor, die auf der Basis definierter Eingangsinformationen und eines vereinfachten Modells zur Beschreibung des Laufrads und Bestimmung der Schaufeleigenfrequenzen erfolgt.

So werden für die mehrkriterielle Optimierung erste Informationen bereitgestellt, die die Randbedingungen einer Laufradanregung durch fremderregte Schwingungen betreffen. Diese Randbedingungen geben Asymmetrien der anströmenden Luft, die zu der Fremderregung der Laufschaufeln führen, an. Die ersten Informationen stellen hierzu beispielsweise Informationen zu Nachlaufdellen stromaufwärts angeordneter Verdichterstufen, Informationen zum Windschatten von stromaufwärts angeordneten Strukturen und/oder Informationen zur Verteilung der Strömung im Triebwerkseinlauf unter definierten Bedingungen, beispielsweise bei Seitenwind, bereit.

Das erfindungsgemäße Verfahren nutzt des Weiteren ein Modell reduzierter Ordnung (auch als "ROM - Reduced Order Model" bezeichnet) zur Beschreibung des Laufrads bzw. zur Berechnung der Eigenschaften des Laufrads und der Laufschaufeln, unter anderem zur Berechnung von Eigenfrequenzen, die die Laufschaufeln bei selbsterregten und fremderregten Schwingungen aufweisen. Das Modell reduzierter Ordnung stellt ein vereinfachtes mathematisches Modell des Laufrads dar, wobei durch die Vereinfachung eine numerische Lösung ermöglicht oder vereinfacht wird. Die Vereinfachung erfolgt beispielsweise durch Reduzierung des Zustandsraums und/oder der Freiheitsgrade des Systems. Gemäß einer Ausgestaltung der Erfindung wird das Modell reduzierter Ordnung auf der Basis eines Modells erstellt, bei dem die Laufschaufeln Punktmassen eines gedämpften Mehrmassenschwinger sind. Eine Ausführungsvariante sieht vor, dass als Modell reduzierter Ordnung das in der folgenden Publikation beschriebene Modell verwendet wird: Yang, M.-T.; Griffin, J.H., 2001. "A Reduced-Order Model of Mistuning Using a Subset of Nominal Modes". ASME J. of Engineering for Gas Turbines and Power, Vol. 123, October, pp. 893-900.

Die ersten Informationen zu Randbedingungen einer Laufradanregung durch fremderregte Schwingungen und das Modell reduzierter Ordnung werden dazu genutzt, eine Mehrzahl von Verstimmungsmustern des Laufrads zu erzeugen. Hierzu werden diese Informationen einem mehrkriteriellen Optimierer zur Verfügung gestellt. Der mehrkriterielle Optimierer erzeugt eine Mehrzahl von Verstimmungsmustern, wobei eine Optimierung zum einen hinsichtlich der Stabilität des Systems gegenüber selbsterregten Schwingungen und zum anderen hinsichtlich der Stabilität des Systems gegenüber fremderregten Schwingungen erfolgt. Dies sind gerade die beiden Kriterien des mehrkriteriellen Optimierers. Eine mehrkriterielle Optimierung wird auch als Pareto-Optimierung bezeichnet. Sie findet typischerweise Einsatz, wenn unabhängige Zielsetzungen existieren. So verhält es sich bei der Erfindung mit den Kriterien einer hohen Stabilität gegenüber selbsterregten Schwingungen und einer hohen Stabilität gegenüber fremderregten Schwingungen.

Eine Stabilität des Systems gegen selbsterregte oder fremderregte Schwingungen bedeutet, dass Anregungen der Schaufeln möglichst stark gedämpft werden bzw. die Schwingungsamplituden bei einer Eigenfrequenz möglichst gering sind.

Es kann vorgesehen sein, dass bei der Optimierung der Stabilität des Systems gegenüber fremderregten Schwingungen eine Optimierung gleichzeitig hinsichtlich mindestens zweier Eigenfrequenzen erfolgt, die durch fremderregten Schwingungen angeregt werden.

Für jedes durch den mehrkriteriellen Optimierer bestimmtes Verstimmungsmuster erfolgt eine Evaluierung dahingehend, dass das Modell reduzierter Ordnung numerisch an einem Laufrad ausgeführt wird, das das jeweilige Verstimmungsmuster implementiert. Dabei werden die Eigenschaften dieses Laufrads im Hinblick auf selbsterregten Schwingungen und im Hinblick auf fremderregte Schwingungen numerisch bestimmt. Das Modell reduzierter Ordnung wird somit ebenfalls dazu genutzt, die Verstimmungsmuster, die Ergebnis der Optimierung sind, hinsichtlich ihrer Eigenschaften zu testen.

Abschließend wird ein Verstimmungsmuster ausgewählt, das dann die Grundlage für die Implementierung einer Verstimmung an einem tatsächlichen Laufrad darstellt. Es wird ein solches optimales Verstimmungsmuster ausgewählt, bei dem das Laufrad sowohl im Hinblick auf selbsterregte Schwingungen als auch im Hinblick auf fremderregte Schwingungen definierten Kriterien am besten oder zumindest gleichwertig zu anderen Verstimmungsmustern genügt. Dies ist beispielsweise dann der Fall, wenn definierte Kriterien zu einer maximalen Dämpfung einer erzeugten Schwingung (so dass eine Anregung schnell abklingt) und/oder zu einem Unterschreiten definierter maximaler Schwingungsamplituden (so dass nur begrenzte maximale Schwingungsamplituden auftreten) erfüllt sind.

Es wird darauf hingewiesen, dass das Ergebnis des Verfahrens bzw. der vorgenommenen Optimierung nicht notwendigerweise eindeutig ist. Typischerweise bilden die möglichen Lösungen bzw. Verstimmungsmuster eine Lösungswolke. Die Auswahl eines Verstimmungsmusters entspricht der Auswahl eines Lösungspunktes aus dieser Lösungswolke.

Gemäß einer Ausgestaltung der Erfindung werden für die mehrkriterielle Optimierung zusätzlich zweite Informationen zu zufälligen Frequenzabweichungen bereitgestellt, die jede Laufschaufel aufweisen kann. Bei den zweiten Informationen handelt es sich beispielsweise um Informationen zu Frequenzabweichungen, die auf Fertigungstoleranzen des Laufrads bei dessen Herstellung und/oder auf Materialinhomogenitäten zurückzuführen sind. Solche Toleranzen bei der Fertigung sind unvermeidbar und beispielsweise in einer Abnutzung des Werkzeugs begründet. Alternativ oder ergänzend kann es sich bei den zweiten Informationen um Informationen zu Frequenzabweichungen handeln, die auf Abnutzung und Verschleiß des Laufrads bei dessen Nutzung zurückzuführen sind. So ändert sich die Geometrie der Laufschaufeln während der Nutzung des Laufrads in einer Strömungsmaschine. Es existieren Erfahrungswerte, wie sich die Eigenfrequenzen zu einzelnen Schwingungsmoden nach bestimmten Nutzungszeiträumen von beispielsweise 6 Monaten oder einem Jahr oder einigen Jahren ändern, abhängig von Umwelteinflüssen wie Belastungen durch Sand, Staub, Salz, etc. Insgesamt geben die zweiten Informationen die unvermeidbaren Änderungen und Streuungen der Eigenfrequenzen an, die die Laufschaufeln bzw. das Laufrad tolerieren können müssen, ohne aufgrund dieser Toleranzen instabile Betriebszustände aufzuweisen.

Die Informationen zu Frequenzabweichungen, die auf Fertigungstoleranzen des Laufrads bei dessen Herstellung und/oder Materialinhomogenitäten zurückzuführen sind, können beispielsweise dadurch ermittelt werden, dass Informationen zu Frequenzabweichungen an einem tatsächlichen Modell des Laufrads gemessen werden. Dies erfolgt beispielsweise dadurch, dass durch Anschlagen der einzelnen Laufschaufeln mit einem Impulshammer die Eigenfrequenzen angeregt und zu jeder einzelnen Schaufel gemessen werden. Hierdurch können typische fertigungsbedingte Abweichungen der Eigenfrequenzen der Schaufeln in einfacher Weise erfasst werden.

Es wird darauf hingewiesen, dass das erfindungsgemäße Verfahren naturgemäß hinsichtlich mindestens einer Eigenfrequenz der Laufschaufeln durchgeführt wird. Es ist jedoch ebenfalls möglich und in vorteilhaften Ausgestaltungen der Erfindung der Fall, dass eine Optimierung hinsichtlich mehrerer Eigenfrequenzen der Laufschaufeln durchgeführt wird. Dabei kann vorgesehen sein, dass eine Auswahl des Verstimmungsmusters unter dem Kriterium erfolgt, dass die Laufschaufeln bei zwei unterschiedlichen Eigenfrequenzen im Hinblick auf fremderregte Schwingungen des Systems optimiert sind. Gleichzeitig erfolgt eine Optimierung im Hinblick auf Stabilität gegenüber selbsterregten Schwingungen.

Als Eigenfrequenzen werden beispielsweise Eigenfrequenzen der Laufschaufeln in mindestens einem Biegemodus und/oder in mindestens einem Torsionsmodus betrachtet.

Die erfindungsgemäße Verstimmung eines Laufrads ist insbesondere von Vorteil bei Verdichterrotoren, die eine nur geringe strukturelle Dämpfung aufweisen. Eine geringe Dämpfung liegt insbesondere dann vor, wenn der Verdichterrotor in BLISK-Bauweise ausgeführt ist, für welchen Fall die Rotorscheibe, die Rotornabe und die Laufschaufeln integral (einstückig) ausgebildet sind (BLISK = "Bladed Disk"), oder wenn der Verdichterrotor in BLING-Bauweise ausgeführt ist, für welchen Fall die Rotornabe und die Laufschaufeln integral (einstückig) ausgebildet sind (BLING = "Bladed Ring"). Dementsprechend ist in Ausgestaltungen der Erfindung vorgesehen, das das Laufrad in BLISK-Bauweise oder in BLING-Bauweise ausgebildet ist. In BLISK-Bauweise oder in BLING-Bauweise ausgebildete Laufräder sind sowohl im Hinblick auf selbsterregten Schwingungen als auch im Hinblick auf fremd erregte Schwingungen empfindlicher als herkömmliche Laufräder.

Eine weitere Ausgestaltung der Erfindung sieht vor, dass das betrachtete Laufrad ein in BLISK-Bauweise ausgebildeter Fan ist.

Gemäß einer Ausgestaltung wird mit dem erfindungsgemäßen Verfahren ein Bauteil einer Gasturbine, insbesondere eines Flugtriebwerks hergestellt.

In einem Erfindungsaspekt weist das Verfahren zur Erzeugung und Auswahl eines Verstimmungsmusters eines eine Mehrzahl von Laufschaufeln aufweisenden Laufrads einer Strömungsmaschine folgende Schritte auf:
- Bereitstellen von ersten Informationen zu den Randbedingungen einer Laufradanregung durch fremderregte Schwingungen,
- Bereitstellen von zweiten Informationen zu zufälligen Frequenzabweichungen, die jede Laufschaufel aufweisen kann,
- Bereitstellen eines Modells reduzierter Ordnung des Laufrads, das Berechnungen zu selbsterregten und zu fremderregten Schwingungen des Laufrads erlaubt, wobei das Modell reduzierter Ordnung ein vereinfachtes mathematisches Modells des Laufrads darstellt, das dessen numerische Lösung erlaubt,
- Erzeugen einer Mehrzahl von Verstimmungsmustern des Laufrads, wobei das Erzeugen der Verstimmungsmuster umfasst: Eingeben der ersten Informationen, der zweiten Informationen und des Modells reduzierter Ordnung in einen mehrkriteriellen Optimierer, und Erzeugen der Verstimmungsmuster durch den mehrkriteriellen Optimierer unter Optimierung einer Stabilität des Systems gegenüber selbsterregten Schwingungen und unter gleichzeitiger Optimierung einer Stabilität des Systems gegenüber fremderregten Schwingungen,
- für jedes erzeugte Verstimmungsmuster: Ausführen des Modells reduzierter Ordnung an einem Laufrad, das das erzeugte Verstimmungsmuster implementiert, und Bestimmen der Eigenschaften dieses Laufrads im Hinblick auf selbsterregte Schwingungen und im Hinblick auf fremderregte Schwingungen,
- Auswählen des oder eines der Verstimmungsmuster, bei dem die Eigenschaften des mit diesem Verstimmungsmuster versehenen Laufrads sowohl im Hinblick auf selbsterregte Schwingungen als auch im Hinblick auf fremderregte Schwingungen definierten Kriterien am besten genügen.

Die Erfindung betrifft gemäß einem weiteren Erfindungsaspekt ein Laufrad einer Strömungsmaschine, dessen Laufschaufeln mit einem gemäß einem Verfahren nach Anspruch 1 erzeugten Verstimmungsmuster versehen sind.

Bei der Strömungsmaschine, in der das mit einem erfindungsgemäß erzeugten Verstimmungsmuster versehene Laufrad eingesetzt wird, handelt es sich beispielsweise um eine Gasturbine, insbesondere ein Flugtriebwerk, beispielsweise ein Turbofan-Triebwerk.

Die Erfindung wird nachfolgend unter Bezugnahme auf die Figuren der Zeichnung anhand mehrerer Ausführungsbeispiele näher erläutert. Es zeigen:
- Figur 1: ein Ablaufdiagramm eines Verfahrens zur Erzeugung und Auswahl eines Verstimmungsmusters für ein Laufrad;
- Figur 2: das Verdichterkennfeld eines Axialverdichters unter gesonderter Darstellung von Instabilitäten, die sich durch ein Schaufelflattern ergeben, wobei drei unterschiedliche Arbeitspunkte C1, C2, C3 dargestellt sind;
- Figur 3: für zwei Modenfamilien die relative Frequenzabweichung gegenüber einem Nennwert in Abhängigkeit von der Moden-ID, wobei zum einen gemessene Werte und zum anderen mit einem Modell reduzierter Ordnung (ROM) berechnete Werte dargestellt sind;
- Figur 4: ein erstes Ausführungsbeispiel durch ein Verfahren gemäß Figur 1 erzeugter Verstimmungsmuster in einem Diagramm, das als Achsen die normierten Amplituden zweier Moden enthält, die durch fremderregte Schwingungen angeregt sind, wobei die erzeugten Verstimmungsmuster in dem Diagramm eine Punktwolke bilden;
- Figur 5: ein zweites Ausführungsbeispiel durch ein Verfahren gemäß Figur 1 erzeugter Verstimmungsmuster in einem Diagramm, das als Achsen die normierten Amplituden zweier Moden enthält, die durch fremderregte Schwingungen angeregt sind, wobei die erzeugten Verstimmungsmuster in dem Diagramm eine Punktwolke bilden;
- Figur 6: bei der Modenfamilie 1 die normierte Amplitude von Schaufeln in Abhängigkeit von der Schaufel-ID für Schaufeln mit Nenngeometrie und für verstimmte Schaufeln, wobei die Amplituden jeweils auf 3 verschiedene Weisen ermittelt wurden;
- Figur 7: bei der Modenfamilie 1 die normierte Amplitude der Schaufel 12 der Figur 6 in Abhängigkeit von der normierten Frequenz, wobei die normierte Amplitude für die Schaufel mit Nenngeometrie und für die verstimmte Schaufel dargestellt ist, und wobei die Amplituden jeweils auf 3 verschiedene Weisen ermittelt wurden;
- Figur 8: bei der Modenfamilie 2 die normierte Amplitude von Schaufeln in Abhängigkeit von der Schaufel-ID für Schaufeln mit Nenngeometrie und für verstimmte Schaufeln, wobei die Amplituden jeweils auf 3 verschiedene Weisen ermittelt wurden;
- Figur 9: bei der Modenfamilie 2 die normierte Amplitude der Schaufel 12 der Figur 8 in Abhängigkeit von der normierten Frequenz, wobei die normierte Amplitude für die Schaufel mit Nenngeometrie und für die verstimmte Schaufel dargestellt ist, und wobei die Amplituden jeweils auf 3 verschiedene Weisen ermittelt wurden;
- Figur 10: für die Modenfamilien 1 und 2 die Frequenzabweichung eines mit einem Verstimmungsmuster versehenen Laufrads im Vergleich zu der Nennfrequenz eines nicht verstimmten Laufrads, wobei die Frequenzabweichung einmal gemessen und einmal berechnet ist; und
- Figur 11: schematisch anhand eines Verdichterkennfelds die Auswirkungen einer Optimierung mit einem gemäß Figur 1 erzeugten Verstimmungsmuster auf die Stabilität des Systems gegenüber selbsterregten Schwingungen.

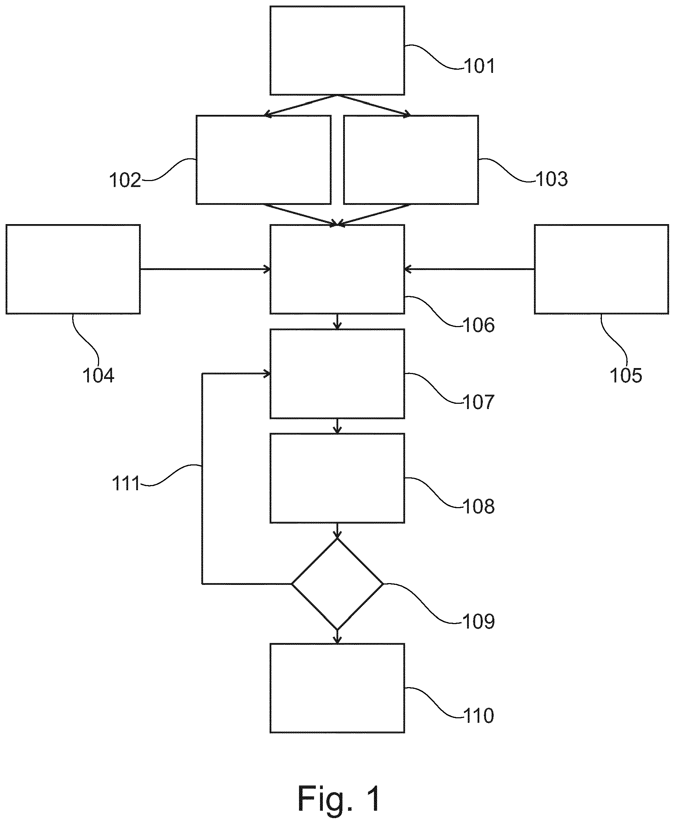

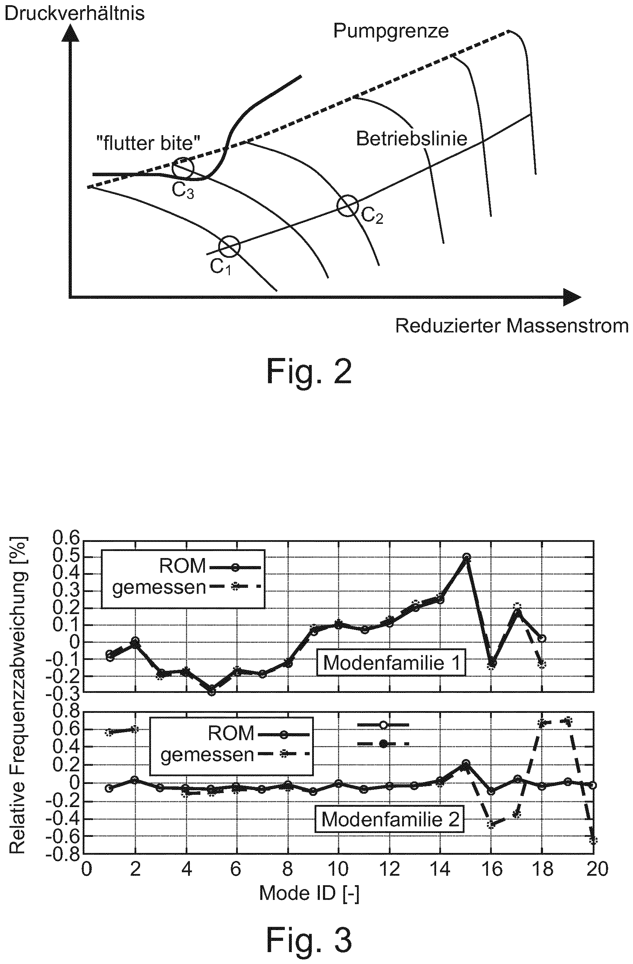

Bevor anhand der Figur 1 ein Ausführungsbeispiel des erfindungsgemäßen Verfahrens zur Erzeugung und Auswahl eines Verstimmungsmusters eines Laufrads einer Strömungsmaschine beschrieben wird, wird die zugrunde liegende Problematik zunächst anhand der Figur 2 verdeutlicht.

Die Figur 2 zeigt für einen Fan als beispielhaft betrachtetes Laufrad das Verdichterkennfeld eines Axialverdichters. Das Verdichterkennfeld umfasst eine Betriebslinie und eine Pumpgrenze. Es sind zwei Arbeitspunkte C1, C2 dargestellt, die auf der Betriebslinie liegen, wobei die Drehzahl des Laufrads beim Arbeitspunkt C2 größer als beim Arbeitspunkt C1 ist. Auf dem Arbeitspunkt C1 liegt eine Eigenfrequenz einer ersten Schwingungsmode 1 und auf dem Betriebspunkt C2 liegt eine Eigenfrequenz einer zweiten Schwingungsmode 2. Die Schwingungsmode 1 weist dabei die auch als "EO = Engine Order" bezeichnete Triebwerksordnung 2 und die Schwingungsmode 2 weist die Triebwerksordnung 4 auf. Diese beiden Schwingungsmoden 1, 2 werden im Rahmen der nachfolgenden Beschreibung primär betrachtet, da sie für die wichtigsten Resonanzen des Laufrads verantwortlich sind.

Des Weiteren liegt eine relevante Betriebsbedingung bei dem Arbeitspunkt C3 vor, dessen Drehzahl zwischen den Drehzahlen der Arbeitspunkt C1 und C2 liegt. Der Arbeitspunkt C3 liegt nahe an Pumpgrenze. Durch Schaufelflattern ist die Arbeitslinie am Arbeitspunkt C3 eingedellt, was auch als "flutter bite" bezeichnet wird. Dies bedeutet, dass der Arbeitspunkt C3 aufgrund von selbsterregten Schwingungen instabil ist und bei diesem Arbeitspunkt ein Schaufelflattern auftreten kann.

Es ist anzustreben, die als "flutter bite" bezeichnete Region in ihrer Größe zu reduzieren oder aufzulösen und damit zu ermöglichen, das Triebwerk bis zur Pumpgrenze betreiben zu können.

Eine solche Optimierung kann durch die Einbringung einer Verstimmung in die Laufschaufel erfolgen, beispielsweise dadurch, dass den Schaufeln ein Verstimmungsmuster der Art "ABAB..." oder "ABCABC..." auferlegt wird, wobei A, B und C jeweils unterschiedliche Eigenfrequenzen einer Schwingungsmode angeben. Dabei besteht jedoch das Problem, dass das Schaufelflattern, das auf selbsterregten Schwingungen zurückgeht, zwar relativ einfach beseitigt werden kann, jedoch im allgemeinen ein Zielkonflikt dahingehend besteht, dass durch Einbringung einer Verstimmung fremderregte Schwingungen in der Regel zunehmen, beispielsweise die Schwingungen der Schwingungsmoden 1 und 2 bei der Figur 2.

Die Figur 1 zeigt ein Verfahren zur Erzeugung und Auswahl eines Verstimmungsmusters, das eine Optimierung der Stabilität eines Laufrads des Systems sowohl gegenüber selbsterregten Schwingungen als auch gegenüber fremderregten Schwingungen bereitstellt und insbesondere dazu geeignet ist, Verstimmungsmuster zu bestimmen und auszuwählen, bei denen eine Verbesserung der Systemeigenschaften hinsichtlich selbsterregter Schwingungen nicht nachteilig begleitet ist durch eine Verschlechterung der Systemeigenschaften bei fremderregten Schwingungen.

In Schritt 101 werden experimentelle Daten hinsichtlich der Verstimmung der Laufschaufeln eines Laufrads ermittelt. Dies umfasst zwei Komponenten. Zum einen werden in Schritt 102 Informationen zu Frequenzabweichungen erfasst, die auf Fertigungstoleranzen des Laufrads bei dessen Herstellung und Materialinhomogenitäten zurückzuführen sind. Hierzu kann beispielsweise vorgesehen sein, an einem hergestellten Laufrad durch Anregung der einzelnen Laufschaufeln jeweils die Eigenfrequenz zu einer betrachteten Schwingungsmode und dadurch die typischen Frequenzabweichungen zwischen den Laufschaufeln eines betrachteten Laufrads zu ermitteln.

Zum anderen werden in Schritt 103 Informationen zu Frequenzabweichungen erfasst, die auf eine Abnutzung bzw. einen Verschleiß des Laufrads bei dessen Nutzung zurückzuführen sind. Hierbei können typische Abnutzungen bei einer Nutzung des Laufrads von zum Beispiel 6 Monaten, einem Jahr oder zwei Jahren bzw. die damit einhergehenden Frequenzänderungen gemessen werden.

Die in Schritt 102 und 103 erfassten und bereitgestellten Informationen geben die Toleranzen an, für die das System in dem Sinne transparent sein muss, dass bei Auftreten dieser Toleranzen keine Instabilitäten durch selbsterregte Schwingungen oder durch fremderregte Schwingungen auftreten.

Die Informationen werden einem mehrkriteriellen Optimierer 106 zugeführt. Der Optimierer 106 erhält weitere Informationen und Randbedingungen durch die Funktionsblöcke 104, 105. Funktionsblock 104 ist ein Modell reduzierter Ordnung des Laufrads. Das Modell erlaubt es, selbsterregte und fremderregte Schwingungen des Laufrads zu berechnen. Als Modell reduzierter Ordnung stellt es ein vereinfachtes mathematisches Modell des Laufrads dar, das dessen numerische Lösung erlaubt. Als Modell wird beispielsweise das von Yang und Griffin in der folgenden Publikation beschriebene Modell verwendet: Yang, M.-T.; Griffin, J.H., 2001. "A Reduced-Order Model of Mistuning Using a Subset of Nominal Modes". ASME J. of Engineering for Gas Turbines and Power, Vol. 123, October, pp. 893-900. Die Berechnung erfolgt auf der Grundlage der relevanten Bewegungsgleichungen, wobei eine aerodynamische Kopplung durch eine Impedanzmatrix Z und Korioliskräfte über eine reduzierte gyroskopische Matrix G berücksichtigt werden.

Die Figur 3 verdeutlicht das hohe Maß an Übereinstimmung, das nach diesem Modell berechnete bzw. vorhergesagte Messwerte zur relativen Frequenzabweichung gegenüber tatsächlich gemessenen Messwerten aufweisen. So zeigt die Figur 3 bei einem beispielhaften Laufrad für eine erste Modenfamilie 1 und für eine zweite Modenfamilie 2 die relative Frequenzabweichung in Abhängigkeit von der Moden-ID. Eine Modenfamilie umfasst dabei alle einander entsprechenden Schwingungsmoden der Schaufeln eines Laufrads (hier die Schwingungsmoden 1 und 2). Es ist erkennbar, dass die gemessenen und die berechneten Werte in weiten Bereichen im Wesentlichen identisch sind. Dies bestätigt die Stärke des verwendeten Modells reduzierter Ordnung.

Im Funktionsblock 105 der Figur 1 werden Informationen zu den Randbedingungen einer Laufradanregung durch fremderregte Schwingungen bereitgestellt. Bei diesen Randbedingungen handelt es sich insbesondere um Informationen zu Nachlaufdellen, die von stromaufwärts angeordneten Verdichterstufen oder anderen stromaufwärts angeordneten Strukturen stammen, oder Informationen zu Asymmetrien der anströmenden Luft, die durch eine Interaktion mit dem potentiellen Feld der stromabwärtigen Geometrie bzw. stromabwärtiger Strukturen bewirkt werden. Hierzu können beispielsweise Informationen dazu bereitgestellt werden, wie viele Stufen mit jeweils wie vielen Schaufeln stromaufwärts und stromabwärts des betrachteten Laufrads angeordnet sind. Zu den Randbedingungen gehören auch Informationen zu Asymmetrien in der Strömung im Triebwerkseinlauf, die sich beispielsweise bei Seitenwind ergeben.

Der mehrkriterielle Optimierer nimmt im Schritt 106 auf der Grundlage der ihm bereitgestellten Formationen und Beziehungen eine Optimierung sowohl im Hinblick auf die Stabilität des Systems gegenüber selbsterregten Schwingungen als auch im Hinblick auf eine Stabilität des Systems gegenüber fremderregten Schwingungen vor. Das Ergebnis einer solchen Optimierung sind Verstimmungsmuster.

Als Optimierer kann dabei ein herkömmlicher, im Handel erhältliche Optimierer eingesetzt werden. Der Optimierer umfasst einen Zufallsgenerator, dessen Zahlenwerte den Ausgangspunkt für die Optimierungen bilden. In Schritt 107 gibt der Optimierer 106 eine Mehrzahl von Verstimmungsmustern aus, wobei jedes Verstimmungsmuster angibt, wie für jede Laufschaufel des Laufrads die Eigenfrequenz bezogen auf mindestens eine Schwingungsmode geändert bzw. verstimmt ist.

Das Ergebnis der zweikritiellen Optimierung ist eine Mehrzahl von Verstimmungsmustern des Laufrads, die als mehrdimensionale Punktwolke dargestellt werden kann. Die Anzahl der Dimensionen hängt ab von der Anzahl der Moden, zu denen eine Optimierung erfolgte. Gemäß einer Ausgestaltung werden mindestens zwei Schwingungsmoden optimiert, die auf fremderregte Schwingungen zurückzuführen sind. Hierbei handelt es sich beispielsweise um die Moden 1 und 2 gemäß den Betriebspunkten C1 und C2 der Figur 1.

Jedes durch den Optimierer 106 erzeugte Verstimmungsmuster 107 wird numerisch in Schritt 108 mit dem Modell reduzierter Ordnung ausgeführt. Das Modell reduzierter Ordnung findet hier somit erneut Verwendung. Anhand des Modells reduzierter Ordnung werden die Eigenschaften des Laufrads im Hinblick auf selbsterregte Schwingungen und im Hinblick auf fremderregte Schwingungen in Schritt 109 berechnet und ausgewertet. Dies kann wie bereits erläutert für eine oder für mehrere Schwingungsmoden erfolgen. Gemäß einer vorteilhaften Ausgestaltung werden dabei mindestens zwei Schwingungsmoden von fremderregten Schwingungen berechnet und erfolgt eine Optimierung des Systems im Hinblick auf diese zwei Schwingungsmoden (und ebenfalls eine Optimierung hinsichtlich eigenerregter Schwingungen).

Nach der Berechnung und Auswertung in Schritt 109 erfolgt eine entsprechende Berechnung zu einem anderen der durch den Optimierer 106 erzeugten Verstimmungsmuster, wie durch den rekursiven Pfeil 111 angedeutet. Im letzten Schritt 110 wird ein Verstimmungsmuster aus den erzeugten und ausgewerteten Verstimmungsmustern ausgewählt. Dabei wird das optimale Verstimmungsmuster ausgewählt. Dies kann automatisiert über ein Computerprogramm oder durch einen menschlichen Nutzer ausgewählt werden.

Das optimale Verstimmungsmuster ist dabei das Muster, bei dem die Eigenschaften des Laufrads sowohl im Hinblick auf selbsterregte Schwingungen als auch im Hinblick auf fremderregte Schwingungen definierten Kriterien am besten genügen. Sofern das Ergebnis nicht eindeutig ist, wird eines der Verstimmungsmuster ausgewählt, das die definierten Kriterien am besten erfüllt. Die definierten Kriterien sind beispielsweise durch Anforderungen an eine maximale Dämpfung und/oder das Unterschreiten definierter maximaler Schwingungsamplituden gegeben.

Nach Auswahl des optimalen Verstimmungsmusters wird dieses in eine entsprechende Hardwareänderung eines Laufrads umgesetzt. Hierzu werden die einzelnen Laufschaufeln bei oder nach der Herstellung des Laufrads jeweils entsprechend dem ausgewählten Verstimmungsmuster in ihren Eigenfrequenzen zu mindestens einer Schwingungsmode verstimmt. Dies kann in an sich bekannter Weise beispielsweise durch Modifikation der Geometrie der einzelnen Laufschaufeln erfolgen.

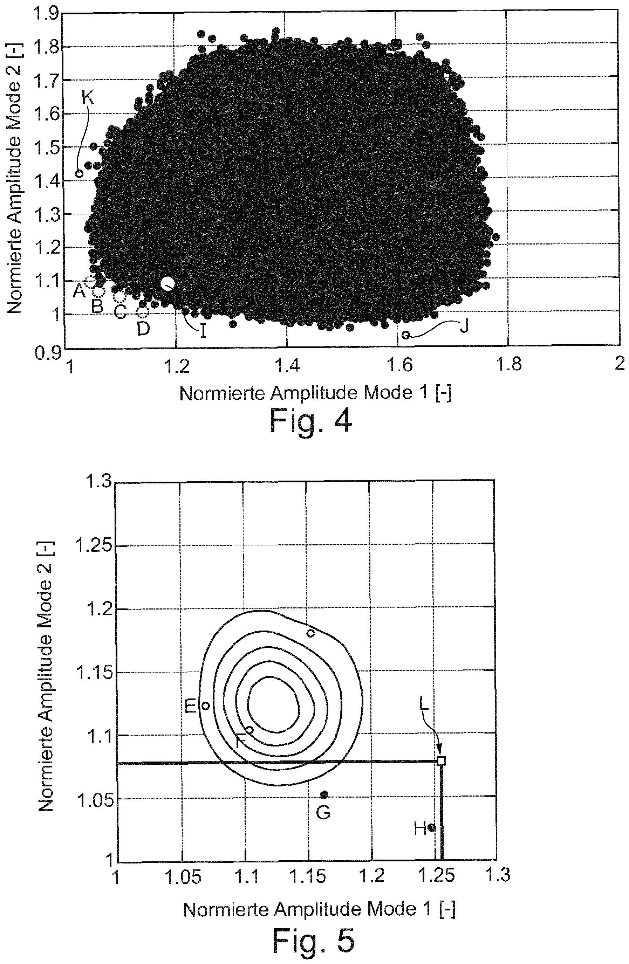

Die Figuren 4-11 verdeutlichen den Erfolg des erfindungsgemäßen Verfahrens durch Messungen an einem verstimmten Fan. Dabei wurden zur Verstimmung der Laufschaufeln des Fans diese mit einer oder mehreren Farbschichten beschichtet. Dies erfolgte, um in einfacher Weise im Rahmen wissenschaftlichen Arbeitens eine Verstimmung zu realisieren. Bei einer Laufschaufel, die in eine Strömungsmaschine eingesetzt wird, erfolgt eine Verstimmung in anderer Weise, insbesondere durch Modifikation der Geometrie der einzelnen Laufschaufeln, wie bereits ausgeführt.

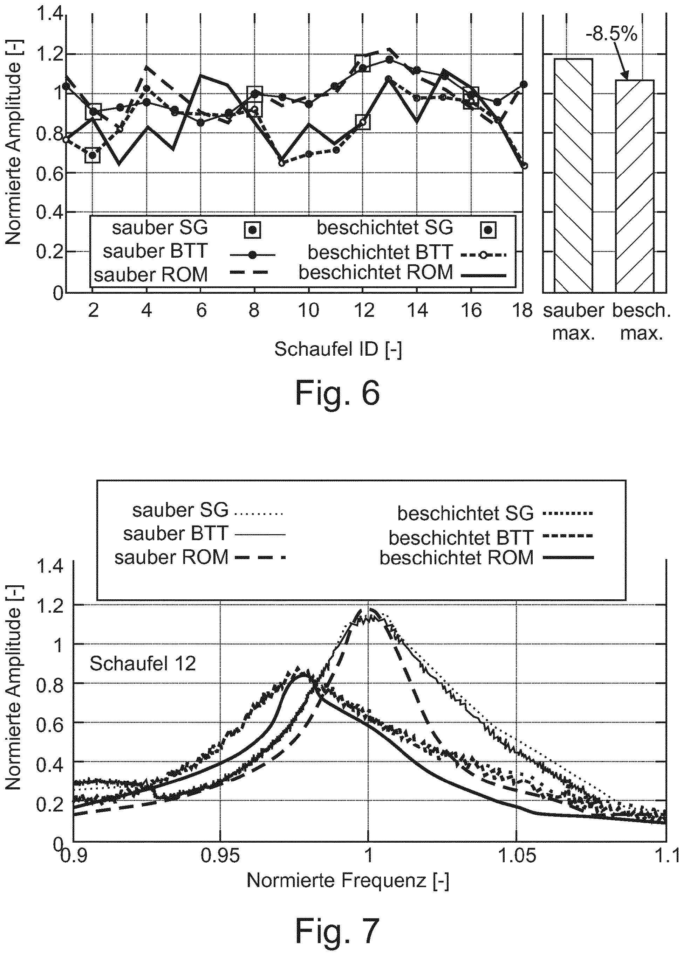

Aufgrund der gewählten Verstimmung verweisen die Figuren 6-9 teilweise auf "beschichtete" und auf "saubere" Laufschaufeln. Die "beschichteten" Laufschaufeln stehen dabei exemplarisch für Laufschaufeln, die in ihrer Eigenfrequenz geändert wurden. Die "sauberen" Laufschaufeln stehen exemplarisch für Laufschaufeln, die lediglich mit der unvermeidbaren, auf Fertigungstoleranzen zurückgehenden Verstimmung versehen sind. Die mittlere Eigenfrequenz letzterer Laufschaufeln entspricht zumindest näherungsweise der Nennfrequenz, d.h. die Nennfrequenz ist die Frequenz, die die Laufschaufeln (jeweils bezogen auf eine bestimmte Schwingungsmode) bei idealer identischer Fertigung ohne Fertigungstoleranzen und ohne irgendeine Verstimmung aufweisen würden. Die entsprechende Amplitude wird als Nennamplitude bezeichnet.

Die Figur 4 zeigt eine bei einer mehrkriteriellen Optimierung erzeugte Wolke von Verstimmungsmustern in einer Ebene, in der die normierte Amplitude der Mode 2 gegenüber der normierten Amplitude der Mode 1 dargestellt ist. Diese Moden werden primär durch fremderregte Schwingungen angeregt. Die Schwingungsmode 1 weist dabei die "Engine Order" bzw. Triebwerksordnung 2 und die Schwingungsmode 2 weist die Triebwerksordnung 4 auf. Die Punktwolke kann weitere Dimensionen aufweisen, die weitere Schwingungsmoden betreffen, beispielsweise auch solche, die bei einer selbsterregten Schwingung angeregt werden.

Die Normierung erfolgt auf die Nennamplitude. Es ist anzustreben, dass die normierten Amplituden der Schwingungsmoden nahe dem Wert 1 oder sogar unter dem Wert 1 liegen. Der Punkt I der Figur 4 kennzeichnet die Schwingungsamplituden eines tatsächlich hergestellten Laufrads. Der Punkt J gibt das globale Optimum der Mode 2 an. Der Punkt K gibt das globale Optimum der Mode 1 an. Diese globalen Optima sind jedoch nachteilig, da sie schlechte Eigenschaften im Hinblick auf die jeweils andere Mode aufweisen.

Die Punkte A, B, C und D stellen das Ergebnis von Optimierungen dar, die gemäß einem Verfahren nach der Figur 1 durchgeführt wurden. Die Verstimmungsmuster, die den Optimierungen A, B, C und D entsprechen, haben dazu geführt, dass sowohl für die Schwingungsmode 1 als auch für die Schwingungsmode 2 gegenüber dem hergestellten Teil (Punkt I) die Amplitude reduziert ist, was einer verbesserten Dämpfung im Hinblick auf diese beiden Schwingungsmoden entspricht.

Die Figur 5 zeigt ein weiteres Ausführungsbeispiel einer Wolke, die das Ergebnis einer mehrkriteriellen Optimierung ist, in einer Ebene, in der die normierte Amplitude der Mode 2 gegenüber der normierten Amplitude der Mode 1 dargestellt ist. Die Wolke ist über Höhenlinien dargestellt, wobei die Höhenlinien in der Mitte der Wolke eine höhere empirische Wahrscheinlichkeitsdichte für das Vorliegen eines Verstimmungsmusters in dem jeweiligen Bereich angeben.

Die Figur 5 kennzeichnet im Punkt L die Schwingungsamplituden eines tatsächlich hergestellten Laufrads. Die Punkte E, F, G und H stellen das Ergebnis von Optimierungen dar, die gemäß einem Verfahren nach der Figur 1 durchgeführt wurden. Die Verstimmungsmuster, die den Optimierungen E, F, G und H entsprechen, haben dazu geführt, dass für die Optimierungen G und H sowohl für die Schwingungsmode 1 als auch für die Schwingungsmoden 2 gegenüber dem hergestellten Teil (Punkt L) die Amplitude reduziert ist. Bei den Optimierungen E und F ist die Amplitude für die Schwingungsmode 1 deutlich reduziert, bei nur geringer Erhöhung der normierten Amplitude für die Schwingungsmode 2.

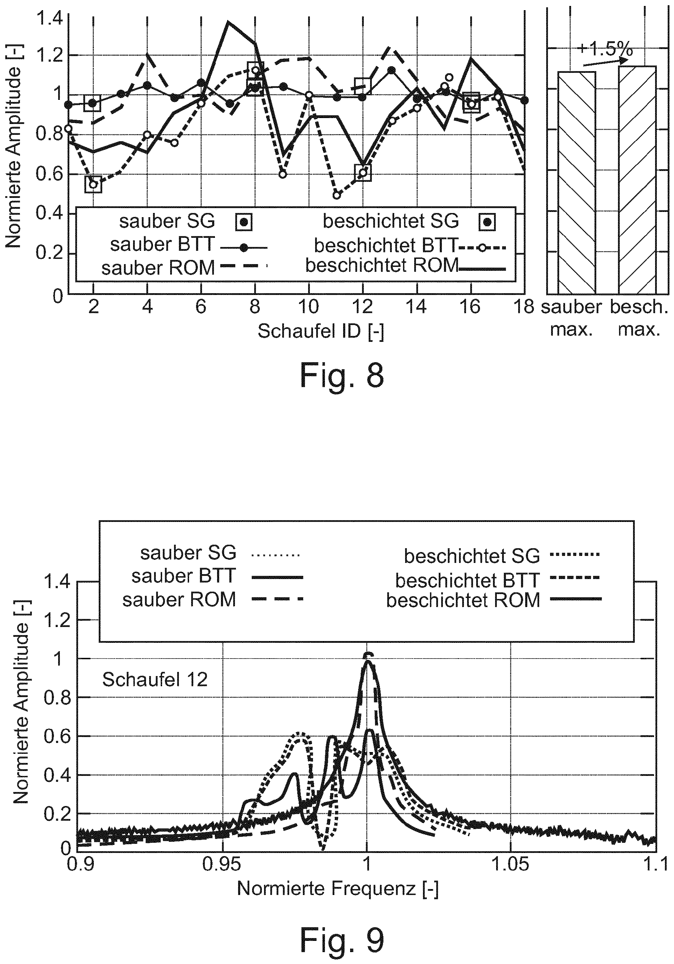

Die Reduzierung oder nur geringfügige Erhöhung der normierten Amplitude für das mit einem Verstimmungsmuster versehene Laufrad ist zusätzlich in der Figur 6 für die Schwingungsmode 1 und in der Figur 8 für die Schwingungsmode 2 dargestellt. Bei den Graphen der Figur 6, die die beschichtete Schaufel betreffen, liegt die normierte Schwingungsamplitude bei fast allen Schaufeln unter der Nennamplitude, wobei eine Normierung auf die Nennamplitude vorliegt. Der Verlauf der Nennamplitude ist dabei sowohl für die "saubere" Schaufel als für die "beschichtete" Schaufel mit 3 Graphen dargestellt, wobei SG für eine tatsächliche Messung mit Dehnungsmessstreifen, BTT für eine tatsächliche Messung der Schaufelspitzenbewegung und ROM für eine Berechnung gemäß dem Modell reduzierter Ordnung steht, wobei eine gute Übereinstimmung zwischen den berechneten und den gemessenen Werten auffällt. Die normierte Amplitude ist bei der in der Figur 6 dargestellten Schwingungsmode 1 beim verstimmten Laufrad um 8,5 % reduziert. Sie ist bei der in Figur 8 dargestellten Schwingungsmode 2 um lediglich 1,5 % erhöht.

Es wird in Erinnerung gerufen, dass diese Werte erreicht werden, während das Flatterschaufeln bzw. selbsterregte Schwingungen gleichzeitig durch das aufgeprägte Verstimmungsmuster vollständig beseitigt werden.

Die Figuren 7 und 9 zeigen die normierten Amplituden in Abhängigkeit von der normierten Frequenz, wobei die Figur 6 die Amplitude für die Schaufel 12 der Figur 5 und die Figur 9 die Amplitude für die Schaufel 12 der Figur 8 zeigt. Hierbei handelt es sich um die Schaufel mit der höchsten Schwingungsamplitude. Diese ist von besonderem Interesse. Die Normierung erfolgt auf die Nennamplitude bzw. die Nennfrequenz. Erneut ist der Verlauf der Nennamplitude sowohl für die "saubere" Schaufel als für die "beschichtete" Schaufel mit 3 Graphen dargestellt, wobei SG für eine tatsächliche Messung mit Dehnungsmessstreifen, BTT für eine tatsächliche Messung der Schaufelspitzenbewegung und ROM für eine Berechnung gemäß dem Modell reduzierter Ordnung steht. Es ist jeweils erkennbar, dass die Amplitude der Schwingung bei der Eigenfrequenz bzw. Resonanzfrequenz durch die Verstimmung abgesenkt ist. Gleichzeitig ist der Bereich, in dem Resonanzen auftreten, verbreitert. Dies entspricht einer vorteilhaften Reduzierung der Schwingungsenergie der Schaufel mit der höchsten Schwingungsamplitude.

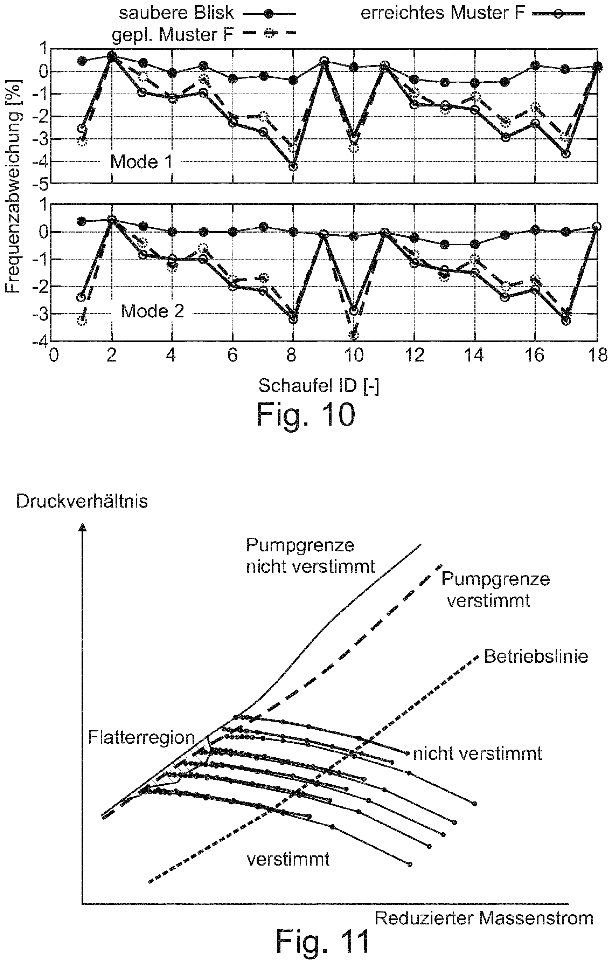

Die Figur 10 zeigt die Frequenzabweichung eines Verstimmungsmusters gegenüber der Nominalfrequenz für die Schaufeln der beiden Modenfamilien 1 und 2. Der Graph "saubere BLISK" gibt dabei die Frequenz des Original Laufrads ohne Maßnahmen zur absichtlichen Verstimmung an. Die vorhandenen geringfügigen Schwankungen sind auf Fertigungstoleranzen zurück zu führen. Der Graph "gepl. Muster F" gibt für jede Schaufel die geplante bzw. nach dem Modell reduzierter Ordnung berechnete Frequenz entsprechend dem ausgewählten Verstimmungsmuster an. Der Graph "erreichtes Muster" F gibt die in der beispielhaften Implementierung erreichte tatsächliche Verstimmung bzw. Frequenzabweichung je Schaufel an.

Die Figur 11 verdeutlicht den Erfolg des erfindungsgemäßen Verfahrens auch im Hinblick auf eine Verbesserung des Flatterverhaltens. Verglichen mit der Figur 2 lassen sich mit der verstimmten Laufschaufel auch Arbeitspunkte realisieren, die in der Region liegen, die beim Original Laufrad ohne Maßnahmen zur absichtlichen Verstimmung die Flatterregion darstellt. Ein Flattern bzw. das Auftreten selbsterregter Schwingungen ist bei der zusätzlich verstimmten Laufschaufel nicht mehr vorhanden.

Die vorliegende Erfindung beschränkt sich in ihrer Ausgestaltung nicht auf die vorstehend beschriebenen Ausführungsbeispiele, die lediglich beispielhaft zu verstehen sind. Beispielsweise treffen die Ausführungsbeispiele der Figuren 2-11 die Ausbildung eines Verstimmungsmusters an einer Fan BLISK. Die Prinzipien der vorliegenden Erfindung gelten jedoch in gleicher Weise für jedes anderen Laufrad, mit oder ohne BLISK oder BLING Ausführung, einer Strömungsmaschine. Auch sind die konkret betrachteten Schwingungsmoden nur beispielhaft zu verstehen. Abhängig von der Form der Laufschaufeln und Art der Anregung können auch andere oder zusätzliche Moden relevant und bei der Erstellung eines Verstimmungsmusters berücksichtigt werden.

Des Weiteren wird darauf hingewiesen, dass die Merkmale der einzelnen beschriebenen Ausführungsbeispiele der Erfindung in verschiedenen Kombinationen miteinander kombiniert werden können. Sofern Bereiche definiert sind, so umfassen diese sämtliche Werte innerhalb dieser Bereiche sowie sämtliche Teilbereiche, die in einen Bereich fallen.

## Patentansprüche

1. Verfahren zur Erzeugung und Auswahl eines Verstimmungsmusters eines eine Mehrzahl von Laufschaufeln aufweisenden Laufrads einer Strömungsmaschine, mit den Schritten:
- Bereitstellen (105) von ersten Informationen zu den Randbedingungen einer Laufradanregung durch fremderregte Schwingungen,
- Bereitstellen (104) eines Modells reduzierter Ordnung des Laufrads, das Berechnungen zu selbsterregten und zu fremderregten Schwingungen des Laufrads erlaubt, wobei das Modell reduzierter Ordnung ein vereinfachtes mathematisches Modells des Laufrads darstellt, das dessen numerische Lösung erlaubt,
- Erzeugen (106-108) einer Mehrzahl von Verstimmungsmustern des Laufrads, wobei das Erzeugen der Verstimmungsmuster umfasst:
∘ Eingeben der ersten Informationen und des Modells reduzierter Ordnung in einen mehrkriteriellen Optimierer, und
∘ Erzeugen (106, 107) der Verstimmungsmuster durch den mehrkriteriellen Optimierer unter Optimierung einer Stabilität des Systems gegenüber selbsterregten Schwingungen und unter gleichzeitiger Optimierung einer Stabilität des Systems gegenüber fremderregten Schwingungen,
- für jedes erzeugte Verstimmungsmuster:
∘ Ausführen (108) des Modells reduzierter Ordnung an einem Laufrad, das das erzeugte Verstimmungsmuster implementiert, und
∘ Bestimmen (109) der Eigenschaften dieses Laufrads im Hinblick auf selbsterregte Schwingungen und im Hinblick auf fremderregte Schwingungen,
- Auswählen (110) eines der Verstimmungsmuster.

2. Verfahren nach Anspruch 1, **dadurch gekennzeichnet, dass** des weiteren zweite Informationen zu zufälligen Frequenzabweichungen, die die Laufschaufeln aufweisen, bereitgestellt werden (102, 103) und diese zweiten Informationen ebenfalls dem mehrkriteriellen Optimierer zugeführt werden.

3. Verfahren nach Anspruch 2, **dadurch gekennzeichnet, dass** das Bereitstellen von zweiten Informationen das Bereitstellen von Informationen zu Frequenzabweichungen umfasst, die auf Fertigungstoleranzen des Laufrads bei dessen Herstellung oder auf Materialinhomogenitäten zurückzuführen sind.

4. Verfahren nach Anspruch 2 oder 3, **dadurch gekennzeichnet, dass** das Bereitstellen von zweiten Informationen das Bereitstellen von Informationen zu Frequenzabweichungen umfasst, die auf Abnutzung und Verschleiß des Laufrads bei dessen Nutzung zurückzuführen sind.

5. Verfahren nach Anspruch 3 oder 4, **dadurch gekennzeichnet, dass** die Informationen zu Frequenzabweichungen zumindest teilweise auf Messungen an einem Modell basieren.

6. Verfahren nach einem der vorangehenden Ansprüche, **dadurch gekennzeichnet, dass** ein solches Verstimmungsmuster ausgewählt wird, bei dem die Eigenschaften des Laufrads sowohl im Hinblick auf selbsterregte Schwingungen als auch im Hinblick auf fremderregte Schwingungen definierten Kriterien am besten genügen.

7. Verfahren nach Anspruch 6, **dadurch gekennzeichnet, dass** die definierten Kriterien eine maximale Dämpfung und/oder das Unterschreiten definierter maximaler Schwingungsamplituden betreffen.

8. Verfahren nach einem der vorangehenden Ansprüche, **dadurch gekennzeichnet, dass** das Verfahren hinsichtlich mindestens einer Eigenfrequenz der Laufschaufeln durchgeführt wird.

9. Verfahren nach einem der vorangehenden Ansprüche, **dadurch gekennzeichnet, dass** Verfahren hinsichtlich mehrerer Eigenfrequenzen der Laufschaufeln durchgeführt wird.

10. Verfahren nach einem der vorangehenden Ansprüche, **dadurch gekennzeichnet, dass** bei der Optimierung der Stabilität des Systems gegenüber fremderregten Schwingungen eine gleichzeitige Optimierung hinsichtlich mindestens zweier Eigenfrequenzen erfolgt, die durch fremderregten Schwingungen angeregt werden.

11. Verfahren nach einem der vorangehenden Ansprüche, **dadurch gekennzeichnet, dass** als Verstimmungsmuster ein Verstimmungsmuster ausgewählt sind, bei dem die Laufschaufeln zu mindestens zwei Eigenfrequenzen im Hinblick auf fremderregte Schwingungen des Systems optimiert sind.

12. Verfahren nach einem der vorangehenden Ansprüche, **dadurch gekennzeichnet, dass** das Modell reduzierter Ordnung des Laufrads auf der Basis eines Modells erstellt ist, bei dem die Laufschaufeln Punktmassen eines gedämpften Mehrmassenschwingers sind.

13. Verfahren nach einem der vorangehenden Ansprüche, **dadurch gekennzeichnet, dass** das Verfahren an einem in BLISK-Bauweise ausgebildeten Laufrad ausgeführt wird.

14. Verfahren nach einem der vorangehenden Ansprüche, **dadurch gekennzeichnet, dass** das Verfahren an einem in BLISK-Bauweise ausgebildeten Fan ausgeführt wird.

15. Laufrad einer Strömungsmaschine, dessen Laufschaufeln mit einem gemäß einem Verfahren nach Anspruch 1 erzeugten Verstimmungsmuster versehen sind.
